# EUROPÄISCHE PATENTANMELDUNG

(11) **EP 4 461 780 A1**
(43) Veröffentlichungstag der Anmeldung: **13.11.2024**
(21) Anmeldenummer: 24174558.7
(22) Anmeldetag: 07.05.2024
(51) Int. Cl.: C09J 7/21, C09J 7/32

(54) **EIN PAD SOWIE EIN VERFAHREN ZUR BEHANDLUNG VON SCHIMMEL AN OBERFLÄCHEN VON BAUWERKEN**

(30) Priorität: 12.05.2023 EP 23020223
(71) Anmelder: Beckmann, Guido, 48431 Rheine (DE); Knaut, Jürgen, 70597 Stuttgart (DE)
(72) Erfinder: Beckmann, Guido, 48431 Rheine (DE); Knaut, Jürgen, 70597 Stuttgart (DE)
(74) Vertreter: Kayser, Christoph

(57) **Zusammenfassung**

Die vorliegende Erfindung betrifft ein Pad sowie ein Verfahren zur Behandlung von Schimmel an Oberflächen von Bauwerken. Der Erfindung liegt die Aufgabe zugrunde, ein Mittel sowie ein Verfahren zur schnellen, temporären Eindämmung von Beeinträchtigungen durch Schimmel an Bauwerken zur Verfügung zu stellen. Die erfindungsgemäße Aufgabe wird gelöst durch ein Pad zur Behandlung von Schimmel an Oberflächen von Bauwerken umfassend einen offenporigen Träger mit einer offenporigen, klebenden Beschichtung. Eine Anwendungsweise besteht darin, den Schimmel temporär mit dem erfindungsgemäßen Pad abzudecken. In einer anderen Anwendungsweise wird das Pad mit der klebenden Beschichtung auf die mit Schimmelpilz befallene Fläche aufgebracht und wieder entfernt, wobei erhebliche Teile des Schimmels entfernt werden.

## Beschreibung

Die vorliegende Erfindung betrifft ein Pad sowie ein Verfahren zur Behandlung von Schimmel an Oberflächen von Bauwerken.

Schimmel in Bauwerken, insbesondere in Wohnräumen, kann beispielsweise bei unzureichender Lüftung durch hohe Luftfeuchtigkeit der Raumluft, durch von außen eindringende Feuchtigkeit oder durch ein Leck in Versorgungsleitungen entstehen. Bei Schimmelfällen in Wohnräumen wird in der Regel ein Sanierungsbetrieb hinzugerufen. Der Projektleiter oder der Leckageorter des Sanierungsunternehmens besichtigt zunächst den Schaden und schätzt den Sanierungsaufwand ab. Die eigentliche Sanierung wird dann häufig aus Termingründen oder fehlender Freigabe für die erforderlichen Arbeiten meist erst mehrere Wochen später vorgenommen.

Neben den durch den Schimmel verursachten Belastungen für die Bewohner kann dies insbesondere in Mietwohnungen für den Vermieter unangenehme Folgen haben, da für die Mieter in der Schimmelbelastung einen Mangel besteht und sie deshalb mit Mietkürzungen bzw. mit Auszug drohen. Es ist deshalb wünschenswert, die Schimmelbelastung für den Zeitraum zwischen Besichtigung des Schadens und der endgültigen Sanierung zu unterbinden oder zumindest einzudämmen.

In der Regel ist die Versicherung des Vermieters für die Schadensbegleichung zuständig. Auch aus Sicht der Versicherung ist eine zügige Beseitigung der Beeinträchtigung deshalb erstrebenswert. Die zusätzlichen Kosten für eine temporäre Beseitigung sind dabei gegenüber dem in diesem Zeitraum auflaufenden Schaden, etwa durch Mietminderungen, vernachlässigbar.

Schimmelschäden sind in der Regel lokal begrenzt, meist nur 1-2 m2.

Der Erfindung liegt die Aufgabe zugrunde, ein Mittel sowie ein Verfahren zur schnellen, temporären Eindämmung von Beeinträchtigungen durch Schimmel an Bauwerken zur Verfügung zu stellen.

Die erfindungsgemäße Aufgabe wird gelöst durch ein Pad zur Behandlung von Schimmel an Oberflächen von Bauwerken umfassend einen offenporigen Träger mit einer offenporigen, klebenden Beschichtung.

Ein solches Pad kann als Erstmaßnahme zur sofortigen Behandlung der Schimmelfläche dienen. Bis zum Beginn der tatsächlichen Sanierungsarbeit können 4 - 6 Wochen vergehen. Bis dahin kann die Freisetzung von Schimmelpilzen und/oder Schimmelsporen in die Raumluft durch Verwendung des erfindungsgemäßen Pads deutlich vermindert oder vollständig unterbunden werden.

Es sind verschiedene Anwendungsweisen möglich. Eine Anwendungsweise besteht darin, den Schimmel temporär mit dem erfindungsgemäßen Pad abzudecken. In einer anderen Anwendungsweise wird das Pad mit der klebenden Beschichtung auf die mit Schimmelpilz befallene Fläche aufgebracht und wieder entfernt, wobei erhebliche Teile des Schimmels entfernt werden. Die Anwendung kann mehrfach wiederholt werden, um möglichst viele Schimmelpilze oder -sporen zu entfernen. Im Anschluss kann die Fläche mit dem möglicherweise verbliebenen Schimmel gemäß der ersten beschriebenen Anwendungsweise bis zur endgültigen Sanierung temporär abgedeckt werden.

Die Verwendung eines offenporigen Trägers und einer offenporigen, diffusionsoffenen Beschichtung ermöglicht das Abtrocknen der Oberflächen und verhindert, dass es hinter dem Pad weiter schimmelt, wenn es zur temporären Abdeckung einer Schimmelstelle verwendet wird. Die Ursache des Schimmels liegt ja in Feuchtigkeit im Bauwerk, entweder von innen, z. B. durch unzureichende Lüftung, oder von außen durch eindringende Feuchtigkeit. Die Gebäudekonstruktion kann auch durch Leitungswasserschäden durchnässt werden, wodurch die Oberflächen ebenfalls schimmeln. Diese Quellen müssen im Rahmen der Sanierung abgestellt werden. Bis zur Sanierung muss noch vorhandene Feuchtigkeit aber abgeführt werden können. Geschlossenporige Trägermaterialien oder Beschichtungen verhindern dies und sorgen für die weitere Ausbreitung des Schimmelbefalls.

Die gemäß einer Ausführungsform des erfindungsgemäßen Pads wasserbasierte Beschichtung erlaubt ein einfaches Aufbringen 5 des Pads als Abdeckpad auf die befallenen Flächen. Die Beschichtung haftet im feuchten Zustand gut auf der Fläche. Nach dem Abtrocken ist sie offenporig und erlaubt die Abführung von Feuchtigkeit, während der Schimmel dahinter effizient eingekapselt wird. Die Beschichtung kann optional auch fungizide Eigenschaften aufweisen. Eine anorganische Beschichtung kann den Schimmelbefall eindämmen und die Verunreinigung der Raumluft durch Schimmelsporen verhindern.

Der offenporige Träger des erfindungsgemäßen Pads kann insbesondere ein Polyestervlies oder ein Polypropylenvlies sein. Polyester- oder Polypropylenvliese sind inert, offenporig und wasser- und dampfdurchlässig. Ein solches Flies kann insbesondere mit einer Kaliwasserglaspaste oder einem Kaliwasserglasgel beschichtet sein.

Die Produktion von erfindungsgemäßen Pads dieser Ausführungsform kann beispielsweise wie folgt ablaufen:
Ein Vlies, insbesondere ein Polyester- oder Polypropylenvlies, wird zugeschnitten auf ein Maß von ca. DIN A3 Größe. Diese Vliesplatten werden mit einer wässrigen Kaliwasserglaspaste beschichtet und anschließend luftdicht in eine Folie oder einen PE-Beutel verpackt.

Die Anwendung kann dann beispielsweise wie folgt ablaufen:
Der Projektleiter eines Sanierungsunternehmens besichtigt die Baustelle und stellt den Schimmelbefall fest. Er nimmt die für die befallene Fläche erforderliche Anzahl von wie oben beschrieben verpackten Pads, entfernt die Verpackung und klebt die Pads auf die betroffene Stelle. Das Wasser in der Beschichtung trocknet ab. Es bleibt das Vlies sowie das Kaliwasserglas zurück. Kaliwasserglas ist in abgetrocknetem Zustand offenporig. Der Schimmel bzw. die Schimmelsporen sind in der harten Kaliwasserglasschicht eingekapselt oder eingebettet und können nicht mehr in die Raumluft gelangen. Das Vlies schützt zusätzlich und dient als weiterer Filter. Das Vlies ist nach dem Abtrocknen sehr hart und kann ohne Probleme bei der anschließenden Sanierung entfernt werden. Der Schimmel wächst in der Wartezeit zwischen Erstbesichtigung und Sanierung nicht weiter und die Sanierung kann erfolgen.

In einer anderen Ausführungsform, die insbesondere für die zweite oben beschriebene Anwendungsweise geeignet ist, wird eine organische Beschichtung auf Basis von Polyacrylaten oder Polyurethanen verwendet. Die Beschichtung kann insbesondere ein Hotmeltkleber sein. Ein solches Pad kann aufgrund seiner guten Klebeeigenschaften insbesondere zur ersten Entfernung von Schimmel eingesetzt werden. Das Pad wird dazu auf die Schimmelstelle aufgeklebt und gleich wieder abgerissen. Der Schimmel und alles lose Material bleiben an dem Pad kleben und kann einfach über den Hausmüll entsorgt werden. Der Vorgang kann mehrfach wiederholt werden, um möglichst viel Schimmel zu entfernen.

Mit einem solchen erfindungsgemäßen Pad kann der Schimmel zu einem Großteil ohne Chemie rein physikalisch entfernt werden.

Ein Pad gemäß dieser zweiten Ausführungsform kann auch zur temporären Abdeckung von Schimmelstellen wie in der ersten Ausführungsform verwendet werden. Alternativ kann nach Anwendung eines solchen Pads zur physikalischen Schimmelentfernung ein Pad der ersten Ausführungsform zur Abdeckung der Schadstelle verwendet werden.

Pads gemäß der zweiten Ausfiihrungsform werden vorzugsweise in länglichen Streifen, beispielsweise mit den Maßen 10 x 25 cm, dimensioniert, damit sie sich trotz der erheblichen Klebekraft leicht von der Schadstelle abreißen lassen.

Die Pads sind vorzugsweise mit einer Trennschicht auf der Beschichtung versehen, beispielsweise mit einem Trennpapier, das vor der Anwendung abgezogen werden kann.

## Patentansprüche

1. Pad zur Behandlung von Schimmel an Oberflächen von Bauwerken umfassend einen offenporigen Träger mit einer offenporigen, klebenden Beschichtung.

2. Pad nach Anspruch 1, **dadurch gekennzeichnet, dass** die Beschichtung wasserbasiert ist und nach dem Abtrocknen offenporig ist.

3. Pad nach Anspruch 1 oder 2, **dadurch gekennzeichnet, dass** die Beschichtung organisch oder anorganisch ist.

4. Pad nach einem der Ansprüche 1 bis 3, **dadurch gekennzeichnet, dass** die Beschichtung eine wässrige Kaliwasserglaspaste oder ein Kaliwasserglasgel ist.

5. Pad nach Anspruch 1 oder 3, **dadurch gekennzeichnet, dass** die Beschichtung eine organische Beschichtung auf Basis von Polyacrylaten oder Polyurethanen ist.

6. Pad nach einem der Ansprüche 1, 3 oder 5, **dadurch gekennzeichnet, dass** die Beschichtung ein Hotmeltkleber ist.

7. Pad nach einem der Ansprüche 1 bis 6, **dadurch gekennzeichnet, dass** der offenporige Träger ein Polyester- oder ein Polypropylenvlies ist.

8. Pad nach einem der Ansprüche 1 bis 7, **dadurch gekennzeichnet, dass** die Beschichtung mit einer Trennschicht, insbesondere mit einem Trennpapier abgedeckt ist.

9. Verfahren zur temporären Behandlung von Schimmel an Oberflächen von Bauwerken, **dadurch gekennzeichnet, dass** ein Pad nach einem der Ansprüche 1 bis 8 auf die Oberfläche aufgebracht und der Schimmel damit abgedeckt wird.

10. Verfahren zur Behandlung von Schimmel an Oberflächen von Bauwerken, **dadurch gekennzeichnet, dass** ein Pad nach einem der Ansprüche 1 bis 8 auf die Oberfläche aufgebracht und anschließend wieder entfernt wird.
